# FASCICULE DE BREVET EUROPEEN

(11) **EP 2 189 344 B1**
(45) Date de publication et mention de la délivrance du brevet: **13.01.2016**
(21) Numéro de dépôt: 09172221.5
(22) Date de dépôt: 05.10.2009
(51) Int. Cl.: B60T 11/26

(54) **Réservoir de liquide hydraulique à canal de mise à l'air orienté**
Behälter für Hydraulikflüssigkeit mit ausgerichtetem Belüftungskanal
Hydraulic fluid container with oriented breather channel

(30) Priorité: 25.11.2008 FR 0806658
(43) Date de publication de la demande: 26.05.2010
(73) Titulaire: Robert Bosch GmbH, 70442 Stuttgart (DE)
(72) Inventeur: L'Aot, Jean-Michel, 93240 Stains (FR); Lenczner, Sylvain, 77450 Esbly (FR); Beaures-D'Augeres, Olivier, 08019 Barcelone (ES); Verbo, Ulysse, 08190 Sant Cugat (ES); Maury, Vincent, 92600 Asnières sur Seine (FR)

(56) Documents cités:
- FR-A- 2 909 983
- US-A- 5 347 813
- US-A1- 2005 091 950

## Description

L'invention concerne un réservoir de liquide hydraulique.

L'invention concerne plus particulièrement un réservoir de liquide hydraulique, notamment un réservoir de liquide de freinage, fermé par un bouchon comportant un élément inférieur et un élément supérieur,
l'élément supérieur présentant la forme d'un couvercle dont une portée intérieure taraudée est destinée à être vissée sur un filetage conforme d'un col du réservoir,
l'élément supérieur recevant intérieurement l'élément inférieur, qui présente la forme d'un disque d'un diamètre correspondant au diamètre interne de l'élément supérieur,
l'élément inférieur comportant dans son épaisseur une première gorge extérieure circulaire coaxiale dite de mise à l'air, qui communique par le biais d'au moins un orifice avec le réservoir et qui débouche dans une face supérieure dudit élément inférieur, et une gorge intérieure circulaire coaxiale dite de mise à l'air, qui débouche dans la face supérieure dudit élément inférieur, qui communique d'une part avec la première gorge extérieure et d'autre part avec un canal radial, qui traverse la première gorge extérieure circulaire et qui débouche dans la périphérie de l'élément inférieur par l'intermédiaire d'un orifice de mise à l'air pour permettre une mise à l'air du réservoir.

On connaît de nombreux exemples de réservoirs hydrauliques de ce type, par exemple du document FR 2 909 983.

Le bouchon d'un tel réservoir comporte de manière connue un élément inférieur qui est reçu dans l'élément inférieur formant couvercle par l'intermédiaire d'une liaison pivot. De ce fait, cet élément inférieur est susceptible de pivoter par rapport à l'élément supérieur. De plus, l'élément supérieur n'occupe pas de position prédéterminée par rapport au col du réservoir, de sorte qu'il est impossible avec un tel bouchon de déterminer l'orientation du canal radial de mise à l'air par rapport au col du réservoir lorsque le bouchon est vissé sur le réservoir.

Or, on a constaté que cette configuration peut poser un problème dans certaines configurations d'utilisation du véhicule recevant le réservoir.

En effet, lorsque le réservoir est rempli à son maximum de liquide hydraulique, une brusque accélération ou décélération du véhicule peut, selon l'orientation du conduit radial de mise à l'air conduire le liquide hydraulique, sous un effet de carène liquide, à déborder inopinément du réservoir.

Le liquide hydraulique étant particulièrement corrosif, ce débordement est susceptible d'endommager des organes du véhicule se trouvant à proximité du réservoir.

Il existe donc un besoin pour un réservoir comportant un conduit radial de mise à l'air dont l'orientation est contrôlée, pour éviter ce débordement.

Par exemple, il peut être souhaitable de disposer d'un réservoir comportant un conduit de mise à l'air orienté vers l'arrière du véhicule. En effet, si le conduit était orienté vers l'avant du véhicule, une décélération violente suite à un freinage pourrait conduire à un débordement du réservoir, alors que le conduit est orienté vers l'arrière, les accélérations du véhicule, d'une part, sont alors insuffisantes pour provoquer le débordement du réservoir vers l'arrière, et d'autre part, le liquide ne peut s'échapper vers l'avant du réservoir, même en cas de freinage violent.

L'invention propose donc un réservoir comportant un conduit radial de mise à l'air dont l'orientation est contrôlée.

Dans ce but, l'invention propose un réservoir du type décrit précédemment, **caractérisé en ce que :**
- l'élément inférieur est indexé par rapport à l'élément supérieur,
- le filetage du col du réservoir occupe une position angulaire déterminée sur ledit col dudit réservoir pour garantir une unique position angulaire de l'élément supérieur lorsqu'il est serré par vissage sur le col du réservoir,
pour garantir une position déterminée de l'orifice de mise à l'air par rapport au col du réservoir.

Selon d'autres caractéristiques de l'invention :
- l'élément inférieur est indexé par rapport à l'élément supérieur par l'intermédiaire de moyens d'indexations qui sont interposés entre la face supérieure de l'élément inférieur et une face inférieure de l'élément supérieur conformé en couvercle,
- les moyens d'indexation comportent une empreinte femelle, débouchant dans la face supérieure de l'élément inférieur qui est destinée à recevoir une empreinte mâle complémentaire faisant saillie à partir de la face inférieure de l'élément supérieur, lesdites empreintes interdisant la rotation de l'élément inférieur par rapport à l'élément supérieur,
- l'empreinte femelle et l'empreinte mâle complémentaire sont globalement coaxiales respectivement aux éléments inférieur et supérieur et sont asymétriques par rapport à l'axe commun de l'élément supérieur et de l'élément inférieur,
- le profil de chaque empreinte correspond à celui d'un cylindre tronqué axialement par un méplat,
- le bouchon est destiné à recevoir un joint annulaire d'étanchéité, interposé entre une face inférieure de l'élément inférieur et le col du réservoir, ou une lèvre intégrée à l'élément supérieur ou à l'élément inférieur,
- un point de départ du filetage du col du réservoir, le pas du filetage du réservoir, et un point de départ du taraudage de l'élément supérieur sont déterminés en fonction de l'épaisseur de l'élément inférieur et de l'élément du joint pour déterminer une position angulaire de l'élément inférieur correspondant à une orientation angulaire déterminée du canal radial de mise à l'air notamment pour permettre à l'orifice de mise à l'air de déboucher vers l'arrière d'un véhicule associé devant recevoir le réservoir,
- l'élément inférieur et l'élément supérieur sont réalisés par moulage d'un matériau plastique.

D'autres caractéristiques et avantages de l'invention apparaîtront à la lecture de la description détaillée qui suit pour la compréhension de laquelle on se reportera aux dessins annexés dans lesquels :
- la figure 1 est une vue d'ensemble en perspective éclatée d'une partie supérieure d'un réservoir selon un étant antérieur de la technique,
- la figure 2 est une vue d'ensemble en perspective éclatée d'une partie supérieure d'un réservoir selon l'invention,
- la figure 3 est une vue en perspective éclatée des éléments constitutifs du bouchon.

Dans la description qui va suivre, des chiffres de référence identiques désignent des pièces identiques ou ayant des fonctions similaires.

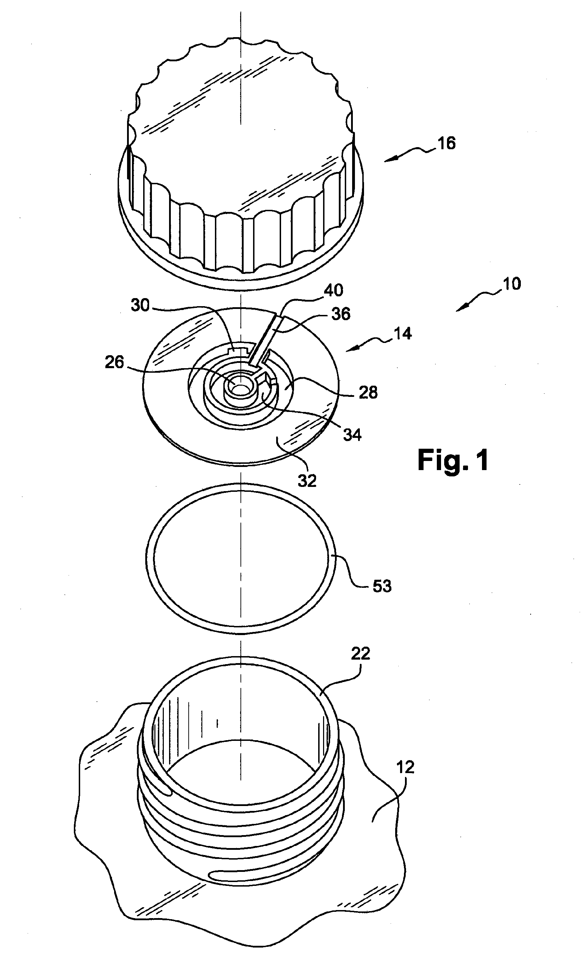

On a représenté à la figure 1 un bouchon 10 réalisé conformément à un état antérieur de la technique.

De manière connue, le bouchon 10 est destiné à équiper un réservoir 12 comportant un col 22.

Le bouchon 10 comporte pour l'essentiel un élément inférieur 14 et un élément supérieur 16.

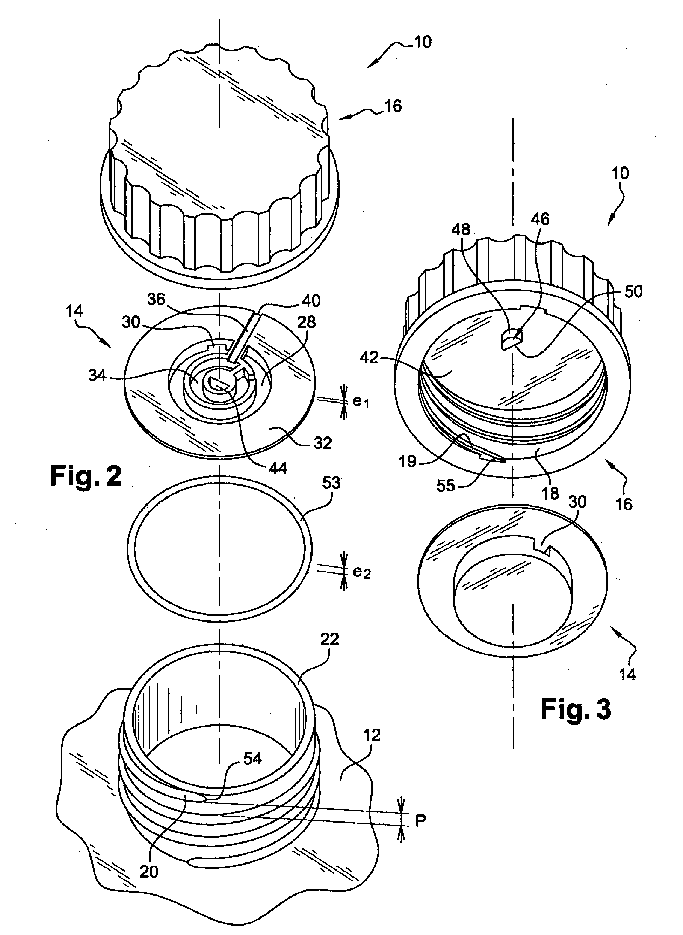

L'élément supérieur 16 présente la forme d'un couvercle sensiblement analogue à celui de la figure 3 dont une portée intérieure 18 taraudée, comportant un taraudage 19, est destinée à être vissée sur un filetage 20 conforme du col 22 du réservoir 12.

L'élément supérieur 16 reçoit intérieurement l'élément inférieur 14, qui présente la forme d'un disque d'un diamètre correspondant au diamètre interne de l'élément supérieur 16.

L'élément inférieur 14 est lié à l'élément supérieur 16 par une liaison pivot constituée d'un pion central cylindrique (non représenté) de l'élément supérieur 16 qui est reçu dans un perçage central 26 de l'élément inférieur 14. Ce pion central 24 peut être emboîté dans le perçage central 26 pour éviter que l'élément inférieur 14 ne s'échappe de l'élément supérieur 16.

L'élément inférieur 14 comporte dans son épaisseur une première gorge extérieure 28 circulaire coaxiale dite de mise à l'air, qui communique par le biais d'au moins un orifice 30 avec le réservoir 12 et qui débouche dans une face supérieure 32 dudit élément inférieur 14.

L'élément inférieur 14 comporte aussi une seconde gorge intérieure 34 circulaire coaxiale dite de mise à l'air, qui débouche dans la face supérieure 32 dudit élément inférieur 14, qui communique d'une part avec la première gorge extérieure 28 et d'autre part avec un canal radial 36, qui traverse la première gorge extérieure 28 circulaire et qui débouche dans la périphérie 38 de l'élément inférieur par l'intermédiaire d'un orifice 40 de mise à l'air pour permettre la mise à l'air du réservoir.

Dans cette configuration, il est aisément compréhensible que l'orientation de l'orifice 40 de mise à l'air n'est par maîtrisée.

Ainsi si par exemple l'orifice 40 de mise à l'air est orienté vers l'avant du véhicule sur lequel le réservoir 10 est monté, un freinage violent peut conduire le liquide de freinage à s'échapper du réservoir par ledit orifice 40.

Pour remédier à cet inconvénient, comme l'illustrent les figures 2 et 3, l'invention propose un réservoir 12 comportant un bouchon 10 du type précédemment décrit, **caractérisé en ce que :**
- l'élément inférieur 14 est indexé par rapport à l'élément supérieur 16,
- le filetage 20 du col 22 du réservoir 12 occupe une position angulaire déterminée sur ledit col dudit réservoir 12 pour garantir une unique position angulaire de l'élément supérieur 16 lorsqu'il est serré par vissage sur le col 22 du réservoir 12.

Cette configuration permet ainsi de garantir une position déterminée de l'orifice 40 de mise à l'air par rapport au col 22 du réservoir 12.

Plus particulièrement, comme l'illustrent les figures 2 et 3, l'élément inférieur 14 est indexé par rapport à l'élément supérieur 16 par l'intermédiaire de moyens d'indexations qui sont interposés entre la face supérieure 32 de l'élément inférieur et une face inférieure 42 de l'élément supérieur 16 conformé en couvercle.

Ces moyens peuvent prendre toute forme connue de l'état de la technique. Toutefois, dans le mode de réalisation préféré de l'invention, les moyens d'indexation comportent une empreinte femelle 44, débouchant dans la face supérieure 32 de l'élément inférieur 14 qui est destinée à recevoir une empreinte mâle 46 complémentaire faisant saillie à partir de la face inférieure 42 de l'élément supérieur 16, et qui a été représentée à la figure 3.

Les empreintes 44, 46 interdisent la rotation de l'élément inférieur 14 par rapport à l'élément supérieur 16.

Il sera donc compris que ces empreintes 44, 46 pourraient être disposées en tout point de la de la face inférieure 42 de l'élément supérieur 16 et la face supérieure 32 de l'élément inférieur 14, pourvu qu'elles rentrent en concordance lors de l'assemblage des éléments inférieur 14 et supérieur 16.

Toutefois, pour simplifier le montage de l'élément inférieur 14 dans l'élément supérieur 16, l'empreinte femelle 44 et l'empreinte mâle complémentaire 46 sont globalement coaxiales respectivement aux éléments inférieur 14 et supérieur 16 et non circulaires.

Il peut donc s'agir d'empreintes 44, 46 de n'importe quel profil connu de l'état de la technique, tel qu'un profil carré ou en étoile, ou autre, interdisant la rotation de l'élément inférieur 14 par rapport à l'élément supérieur 16.

Toutefois dans le mode de réalisation préféré de l'invention, le profil de chaque empreinte correspond à celui d'un cylindre tronqué axialement par un méplat. Par exemple, le profil de l'empreinte mâle 46 est constitué d'un cylindre 48 tronqué par un méplat 50, l'empreinte femelle 44 étant évidemment complémentaire de l'empreinte mâle 46.

Par ailleurs, le bouchon 10 est destiné à recevoir un joint annulaire d'étanchéité 53, interposé entre une face inférieure 52 de l'élément inférieur 14 et le col 22 du réservoir 12.

En variante ce joint peut être remplacé par une lèvre intégrée à l'élément supérieur 16 ou à l'élément inférieur 14.

Pour garantir une orientation adéquate de l'orifice 40 de mise à l'air, l'élément supérieur 16 doit occuper une position angulaire déterminée par rapport au col 22 du réservoir 12, l'élément inférieur 14 occupant par ailleurs une position angulaire relative déterminée par rapport à l'élément supérieur 16.

A cet effet, un point de départ 54 du filetage 20 du col du réservoir, le pas "p" du filetage 20 du réservoir 12, et un point de départ 55 du taraudage 19 de l'élément supérieur 16, sont déterminés en fonction de l'épaisseur "e1" de l'élément inférieur 14 et de l'épaisseur "e2" du joint 53 pour déterminer une position angulaire de l'élément inférieur 14 correspondant à une orientation angulaire déterminée du canal 36 radial de mise à l'air. Cette configuration permet par exemple à l'orifice 40 de mise à l'air de déboucher vers l'arrière d'un véhicule associé devant recevoir le réservoir 12.

Enfin, il sera compris que dans le mode de réalisation préféré de l'invention, l'élément inférieur 14 et l'élément supérieur 16 sont réalisés par moulage d'un matériau plastique.

L'invention permet donc de remédier efficacement aux risques de débordement d'un réservoir 12 de liquide hydraulique.

## Revendications

1. Réservoir (12) de liquide hydraulique, notamment un réservoir de liquide de freinage, fermé par un bouchon (10) comportant un élément inférieur (14) et un élément supérieur (16),
l'élément supérieur (16) présentant la forme d'un couvercle dont une portée intérieure (18) taraudée est destinée à être vissée sur un filetage (20) conforme d'un col (22) du réservoir (12),
l'élément supérieur (16) recevant intérieurement l'élément inférieur (14), qui présente la forme d'un disque d'un diamètre correspondant au diamètre interne de l'élément supérieur (16),
l'élément inférieur (14) comportant dans son épaisseur une première gorge extérieure (28) circulaire coaxiale dite de mise à l'air, qui communique par le biais d'au moins un orifice (30) avec le réservoir (12) et qui débouche dans une face supérieure (32) dudit élément inférieur (14), et une seconde gorge intérieure circulaire (34) coaxiale dite de mise à l'air, qui débouche dans la face supérieure (32) dudit élément inférieur (14), qui communique d'une part avec la première gorge extérieure (28) et d'autre part avec un canal radial (36), qui traverse la première gorge extérieure circulaire (28) et qui débouche dans la périphérie (38) de l'élément inférieur (14) par l'intermédiaire d'un orifice (40) de mise à l'air pour permettre une mise à l'air du réservoir,
**caractérisé en ce que** :
- l'élément inférieur (14) est indexé par rapport à l'élément supérieur (16),
- le filetage (20) du col (22) du réservoir (12) occupe une position angulaire déterminée sur ledit col (22) dudit réservoir (12) pour garantir une unique position angulaire de l'élément supérieur (16) lorsqu'il est serré par vissage sur le col (22) du réservoir (12),
pour garantir une position déterminée de l'orifice (40) de mise à l'air par rapport au col (22) du réservoir (12).

2. Réservoir (12) selon la revendication précédente, **caractérise en ce que** l'élément inférieur (14) est indexé par rapport à l'élément supérieur (16) par l'intermédiaire de moyens d'indexations qui sont interposés entre la face supérieure (32) de l'élément inférieur (14) et une face inférieure (46) de l'élément supérieur (16) conformé en couvercle.

3. Réservoir (12) selon la revendication précédente, **caractérisé en ce que** les moyens d'indexation comportent une empreinte femelle (44), débouchant dans la face supérieure (32) de l'élément inférieur (14) qui est destinée à recevoir une empreinte mâle (46) complémentaire faisant saillie à partir de la face inférieure (46) de l'élément supérieur (16), lesdites empreintes (44, 46) interdisant la rotation de l'élément inférieur (14) par rapport à l'élément supérieur (16).

4. Réservoir (12) selon la revendication précédente, **caractérisé en ce que** l'empreinte femelle (44) et l'empreinte mâle (46) complémentaire sont globalement coaxiales respectivement aux éléments inférieur (14) et supérieur (16) et sont asymétriques par rapport à l'axe (A) commun de l'élément supérieur (16) et de l'élément inférieur (14).

5. Réservoir (12) selon la revendication précédente, caractérisé en ce le profil de chaque empreinte correspond à celui d'un cylindre (48) tronqué axialement par un méplat (50).

6. Réservoir (12) selon l'une quelconque des revendications précédentes, **caractérisé en ce que** le bouchon (10) est destiné à recevoir un joint (53) annulaire d'étanchéité, interposé entre une face inférieure (52) de l'élément inférieur (14) et le col (22) du réservoir (12).

7. Réservoir (10) selon la revendication précédente, caractérisé en ce un point de départ (54) du filetage (20) du col du réservoir, le pas (p) du filetage (20) du réservoir (12), et un point de départ (55) du taraudage (19) de l'élément supérieur (16) sont déterminés en fonction de l'épaisseur (e1) de l'élément inférieur (14) et de l'épaisseur (e2) du joint (3) pour déterminer une position angulaire de l'élément inférieur (14) correspondant à une orientation angulaire déterminée du canal (36) radial de mise à l'air notamment pour permettre à l'orifice (40) de mise à l'air de déboucher vers l'arrière d'un véhicule associé devant recevoir le réservoir (10).

8. Réservoir (10) selon l'une quelconque des revendications précédentes, **caractérisé en ce que** l'élément inférieur (14) et l'élément supérieur (16) sont réalisés par moulage d'un matériau plastique.

## Patentansprüche

1. Behälter (12) für Hydraulikflüssigkeit, insbesondere ein Bremsflüssigkeitsbehälter, der von einer Verschlusskappe (10) verschlossen wird, die ein unteres Element (14) und ein oberes Element (16) aufweist,
wobei das obere Element (16) die Form eines Deckels hat, von dem eine mit Innengewinde versehene Auflagefläche (18) dazu bestimmt ist, auf ein entsprechendes Außengewinde (20) eines Halses (22) des Behälters (12) geschraubt zu werden,
wobei das obere Element (16) innen das untere Element (14) aufnimmt, das die Form einer Scheibe mit einem Durchmesser hat, der dem Innendurchmesser des oberen Elements (16) entspricht,
wobei das untere Element (14) in seiner Dicke eine erste koaxiale kreisförmige so genannte Belüftungs-Außenrille (28), die über mindestens eine Öffnung (30) mit dem Behälter (12) in Verbindung steht und die in eine Oberseite (32) des unteren Elements (14) mündet, und eine zweite koaxiale kreisförmige so genannte Belüftungs-Innenrille (34) aufweist, die in die Oberseite (32) des unteren Elements (14) mündet, die einerseits mit der ersten Außenrille (28) und andererseits mit einem radialen Kanal (36) in Verbindung steht, der die erste kreisförmige Außenrille (28) durchquert und der in den Umfang (38) des unteren Elements (14) mittels einer Belüftungsöffnung (40) mündet, um eine Belüftung des Behälters zu erlauben,
**dadurch gekennzeichnet, dass**:
- das untere Element (14) bezüglich des oberen Elements (16) indexiert ist,
- das Außengewinde (20) des Halses (22) des Behälters (12) eine bestimmte Winkelstellung auf dem Hals (22) des Behälters (12) einnimmt, um eine einzige Winkelstellung des oberen Elements (16) zu gewährleisten, wenn es durch Schrauben auf dem Hals (22) des Behälters (12) angezogen wird,
um eine bestimmte Stellung der Belüftungsöffnung (40) bezüglich des Halses (22) des Behälters (12) zu garantieren.

2. Behälter (12) nach dem vorhergehenden Anspruch, **dadurch gekennzeichnet, dass** das untere Element (14) bezüglich des oberen Elements (16) mittels Indexierungseinrichtungen indexiert wird, die zwischen die Oberseite (32) des unteren Elements (14) und eine Unterseite (46) des als Deckel geformten oberen Elements (16) eingefügt sind.

3. Behälter (12) nach dem vorhergehenden Anspruch, **dadurch gekennzeichnet, dass** die Indexierungseinrichtungen eine vertiefte Prägung (44) aufweisen, die in die Oberseite (32) des unteren Elements (14) mündet, die dazu bestimmt ist, eine komplementäre erhabene Prägung (46) aufzunehmen, die ausgehend von der Unterseite (46) des oberen Elements (16) vorsteht, wobei die Prägungen (44, 46) die Drehung des unteren Elements (14) bezüglich des oberen Elements (16) verhindern.

4. Behälter (12) nach dem vorhergehenden Anspruch, **dadurch gekennzeichnet, dass** die die vertiefte Prägung (44) und die komplementäre erhabene Prägung (46) global koaxial zum unteren (14) bzw. oberen Element (16) und bezüglich der gemeinsamen Achse (A) des oberen Elements (16) und des unteren Elements (14) unsymmetrisch sind.

5. Behälter (12) nach dem vorhergehenden Anspruch, **dadurch gekennzeichnet, dass** das Profil jeder Prägung demjenigen eines Zylinders (48) entspricht, der axial durch eine Abflachung (50) abgestumpft wird.

6. Behälter (12) nach einem der vorhergehenden Ansprüche, **dadurch gekennzeichnet, dass** die Verschlusskappe (10) dazu bestimmt ist, eine Ringdichtung (53) aufzunehmen, die zwischen eine Unterseite (52) des unteren Element (14) und den Hals (22) des Behälters (12) eingefügt wird.

7. Behälter (10) nach dem vorhergehenden Anspruch, **dadurch gekennzeichnet, dass** ein Ausgangspunkt (54) des Außengewindes (20) des Halses des Behälters, die Steigung (p) des Außengewindes (20) des Behälters (12) und ein Ausgangspunkt (55) des Innengewindes (19) des oberen Elements (16) abhängig von der Dicke (e1) des unteren Elements (14) und der Dicke (e2) der Dichtung (3) bestimmt werden, um eine Winkelstellung des unteren Elements (14) zu bestimmen, die einer bestimmten Winkelausrichtung des radialen Belüftungskanals (36) entspricht, insbesondere um es der Belüftungsöffnung (40) zu ermöglichen, zur Rückseite eines zugeordneten Fahrzeugs zu münden, das den Behälter (10) aufnehmen soll.

8. Behälter (10) nach einem der vorhergehenden Ansprüche, **dadurch gekennzeichnet, dass** das untere Element (14) und das obere Element (16) durch Formen eines Kunststoffs hergestellt werden.

## Claims

1. Hydraulic fluid reservoir (12), in particular a brake fluid reservoir, closed by a cap (10) comprising a lower element (14) and an upper element (16),
the upper element (16) having the form of a cover of which an internally threaded inner bearing surface (18) is intended to be screwed onto a matching thread (20) on a neck (22) of the reservoir (12),
the upper element (16) internally receiving the lower element (14), which has the form of a disc with a diameter corresponding to the inside diameter of the upper element (16),
the lower element (14) having within its thickness a first coaxial circular outer groove (28), termed a venting groove, which communicates via at least one orifice (30) with the reservoir (12) and which opens into an upper face (32) of the said lower element (14), and a second coaxial circular inner groove (34), termed a venting groove, which opens into the upper face (32) of the said lower element (14), which communicates, on the one hand, with the first outer groove (28) and, on the other hand, with a radial channel (36), which passes through the first circular outer groove (28) and which opens into the periphery (38) of the lower element (14) by way of a venting orifice (40) to allow the reservoir to be vented,
**characterized in that**:
- the lower element (14) is indexed with respect to the upper element (16),
- the thread (20) on the neck (22) of the reservoir (12) occupies a defined angular position on the said neck (22) of the said reservoir (12) to ensure a unique angular position of the upper element (16) when it is tightened by screwing onto the neck (22) of the reservoir,(12),
in order to ensure a defined position of the venting orifice (40) with respect to the neck (22) of the reservoir (12).

2. Reservoir (12) according to the preceding claim, **characterized in that** the lower element (14) is indexed with respect to the upper element (16) via indexing means which are interposed between the upper face (32) of the lower element (14) and a lower face (46) of the upper element (16) configured as a cover.

3. Reservoir (12) according to the preceding claim, **characterized in that** the indexing means comprise a female impression (44) opening into the upper face (32) of the lower element (14) and intended to receive a complementary male impression (46) projecting from the lower face (46) of the upper element (16), the said impressions (44, 46) preventing the lower element (14) from rotating with respect to the upper element (16).

4. Reservoir (12) according to the preceding claim, **characterized in that** the female impression (44) and the complementary male impression (46) are completely co-axial to the lower (14) and upper (16) elements respectively and are asymmetrical with respect to the common axis (A) of the upper element (16) and the lower element (14).

5. Reservoir z(12) according to the preceding claim, **characterized in that** the profile of each impression corresponds to that of a cylinder (48) truncated axially by a flat portion (50).

6. Reservoir (12) according to any one of the preceding claims, **characterized in that** the cap (10) is intended to receive an annular seal (53) interposed between a lower face (52) of the lower element (14) and the neck (22) of the reservoir (12).

7. Reservoir (10) according to the preceding claim, **characterized in that** a starting point (54) of the thread (20) on the neck of the reservoir, the pitch (p) of the thread (20) on the reservoir (12), and a starting point (55) of the internal thread (19) on the upper element (16) are determined as a function of the thickness (e1) of the lower element (14) and the thickness (e2) of the seal (3) in order to determine an angular position of the lower element (14) corresponding to a defined angular orientation of the radial venting channel (36) in particular to allow the venting orifice (40) to open towards the rear of an associated vehicle which is to receive the reservoir (10) .

8. Reservoir (10) according to any one of the preceding claims, **characterized in that** the lower element (14) and the upper element (16) are produced by moulding a plastic.
